# EUROPEAN PATENT SPECIFICATION

(11) **EP 0 596 844 B1**
(45) Date of publication and mention of the grant of the patent: **28.08.1996**
(21) Application number: 93850190.5
(22) Date of filing: 08.10.1993
(51) Int. Cl.: B23B 27/06, B23B 27/16

(54) **Cutting insert for grooving operations**
Nutenschneideinsatz
Plaquette de coupe pour rainurage

(30) Priority: 27.10.1992 SE 9203133
(43) Date of publication of application: 11.05.1994
(73) Proprietor: SANDVIK AKTIEBOLAG, 811 81 Sandviken (SE)
(72) Inventor: Gustafsson, Lars-Erik, S-811 32 Sandviken (SE); Wiman, Jörgen, S-811 52 Sandviken (SE)
(74) Representative: Taquist, Lennart

(56) References cited:
- EP-A- 0 232 692
- WO-A-90/14930
- DE-A- 1 945 256

## Description

The present invention relates to an indexable insert for grooving operations, the basic form of which is triangular and which incorporates a top surface, a plane parallel bottom surface and a number of edge surfaces connecting said top and bottom surfaces. Each corner portion of the insert has an extension carrying a cutting edge oriented substantially perpendicular to the grooving direction. Those edges which join the cutting edge of said extension are converging towards the grooving direction. The extension could be symmetrical or unsymmetrical in its shape.

Available triangular indexable inserts for grooving have a shape that demands relatively much cemented carbide counted as per useful cutting edge lenght. This type of material is expensive and it is therefore of economic advantage to try to reduce the material necessary for each useful cutting edge. It is also desirable to be able of using inserts of such shape that they match the standard type holders for polygonal indexable inserts and that such insert has a shape that enables its usage together with other inserts.

One object of the present invention is to shape an indexable insert such that a relatively limited amount of hard material is required at the same time as such insert fits into a standard type toolholder.

It is another object of the present invention to provide an insert such that it becomes suitable for grooving in a holder which also carries an insert for cut-off in a direction mainly perpendicular from the grooving direction of the indexable insert according to the present invention.

The invention will now be described more in detail by reference to the attached drawings which show a preferred embodiment of the invention.
Fig 1 is a plan view of the insert of the invention,
Fig 2 is a side view of the insert,
Fig 3 is a sectional view along the line A-A in Fig 1,
Fig 4 is a sectional view along the line B-B in Fig 1,
Fig 5 shows a portion of a tool, in plan view, equipped with an insert of the invention for grooving,
Fig 6 shows the tool in engagement with a workpiece, and
Fig 7 shows the tool in engagement with another workpiece.

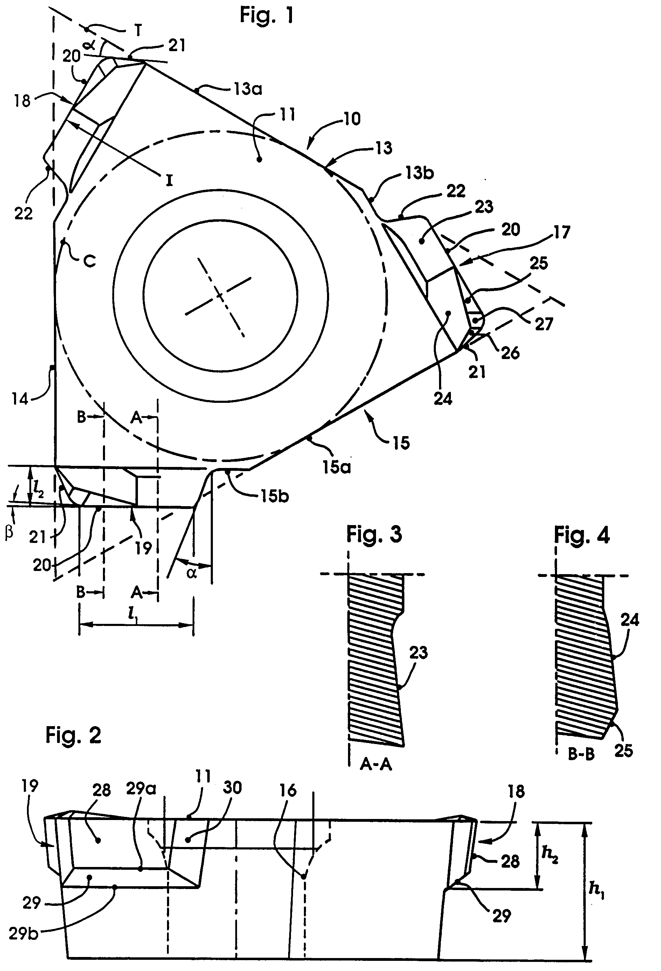

An insert 10 according to the invention is shown in Fig 1, 2 and 3, which comprises an upper surface 11, 1 plane parallel opposite bottom surface 12 and three identical side surfaces 13, 14, 15 intersecting the upper and bottom surfaces. The insert has a central aperture 16 for the receipt of a suitable clamp device whereby said aperture extends substantially perpendicularly from said upper and bottom surfaces. The insert is in each corner provided with an extension 17, 18, 19 each of which has a cutting edge 20. The edges 21, 22 converge towards the corner and extends to the cutting edge 20 whereby the side edge 21 extends at an angle α, and the side edge 22 extends at the same angle in relation to a line parallel with the grooving direction I. In an alternative embodiment the edge 21 could extend substantially parallel with said direction I. As another alternative said side edges 21, 22 could be oriented at different acute angles from said grooving direction. Side surfaces 13, 14, 15 intersect with the upper surface 11 at an acute angle and with the bottom surface 12 at an obtuse angle. Surface portion 13a constitutes one portion of a side of an imaginary triangle T defined by a circle C inscribed therein with its centre coinciding with the centre of the insert 10. As a consequence thereof said surface portion 13a becomes a tangential line to said circle whereas its adjacent surface portion 13b becomes located at a distance beyond said circle C. Cutting edge 20 extends substantially parallel with surface portion 13b. Each extension is located outside said triangle T in its entirety, whereby all three sides of said triangle represent tangential lines of said circle C.

Each extension 17, 18, 19 is confined by an upper surface 23 that is inclined and located somewhat below the plane of said upper surface 11 and by a first bevelled face 24 which is raised in relation to said upper surface 11 whilst inclined in similarity with surface 23. This bevelled face 24 is a portion of a raised protrusion which is otherwise confined by two other downwards inclined bevelled faces 25 and 26 and a third bevel face 27 therebetween oriented at obtuse angles from said second bevelled faces 25, 26. Said second bevelled face 25 forms an obtuse angle at its intersection with cutting edge 20. Each of said extensions 17, 18, 19 is furthermore confined by a number of side surfaces 28, 29, 30 out of which surface 28 provides the clearance face of the cutting edge 20 and surfaces 29 and 30 intersect with said clearance face 28 at an obtuse angle. The edges 29a, 29b of the surface 29 extends substantially parallel with the cutting edge 20 whereas the surface 30 that joins surface 28 extends at an angle of 60-90° in relation to the cutting edge 20. In the illustrated embodiment the angle α between edge 22 and grooving direction I is about 15°. The angle α should normally be in the range 2-35°, preferably 10-30°. By this arrangement no undesired edge formation is obtained. The length l₁ of the cutting edge 20 is in the illustrated embodiment substantially one third of the diameter of the circle C. Simultaneously it has been found suitable that the grooving depth of extension 17, 18, 19, i.e. the length l₂, amounts to about 30-40 % of the length of the cutting edge 20. Also, it is suitable to provide the size of said extension such that the height h₂ amounts to 20-100 %, preferably 30-50 % of the entire height h₁ of each side surface 13, 14, 15. With one embodiment the extension has such dimensions that its forward inner corner portion, which defines the extension of the edge 22 becomes a tangential line in regard of the triangle T. Further, it has been found suitable to provide the cutting edge 20 of the extension such that it extends at an acute angle β in relation to a line that extends perpendicularly from the grooving direction I. The angle β should normally have a value in the range 0,5-2°.

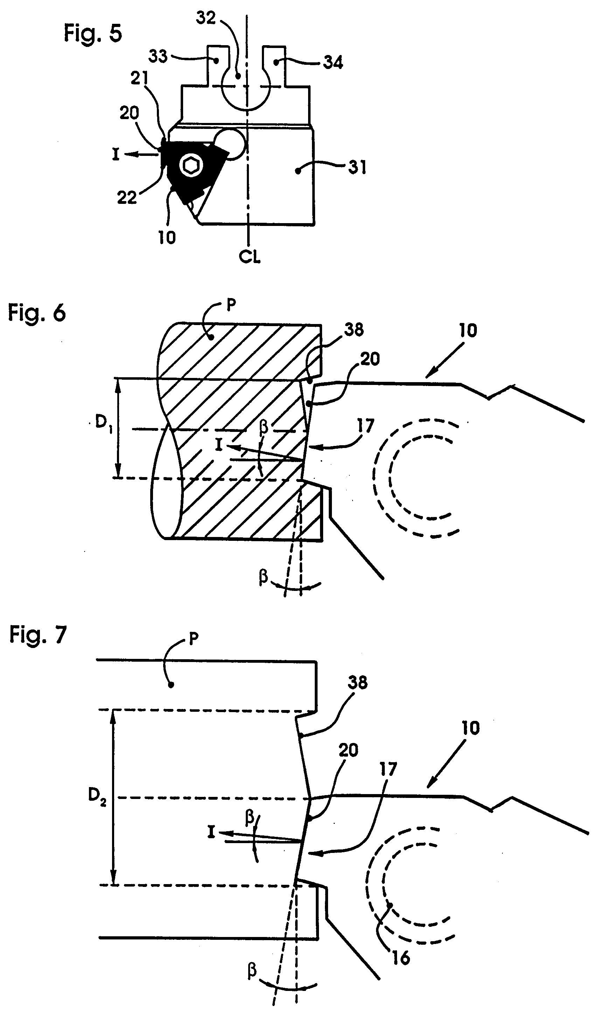

In Fig 5 there is shown a tool holder 31 that is equipped with a laterally extending insert 10 according to the invention located on one side of the symmetrical axis CL. The rear portion of the holder is provided as a securing device having a groove 32 the entrance of which is narrowed by means of two protrusions 33, 34. The insert 10 is secured by means of a central locking screw which is threadably engaged in the holder 31. The insert 10 is provided to be used as a grooving insert acting in grooving direction I. The grooving direction I is preferably arranged at a certain small angle β in regard of the central axis of the cylindrical workpiece P as shown in Fig 6-7. This arrangement enables, for instance, to make a cut-off operation without change of tools, of a cylindrical workpiece P after which a grooving operation is performed by means of insert 10 in the central portion of said cylindrical workpiece which is frequently occurring sequence in the mass production of various tooling components in the machining industry.

### Example

In Fig 6-7 there is shown an embodiment where an insert 10 is performing a grooving operation in the end surface of a cylindrical workpiece P. In this illustrated embodiment an insert has been chosen which has an extension with a cutting edge 20 oriented at an angle β that amounts to 1°. With the embodiment shown in Fig 6 the diameter D₁ of the desired recess 38 is approximately the same as the length of the cutting edge 20, i.e. about 3,5 mm. As a consequence of the shape of the insert it is possible to make a chipforming metalworking operation in such a recess without undesirable chip rolling.

In Fig 7 there is shown a metalworking operation with the same insert engaging a recess 38 with a diameter D₂ of about 6,9 mm. In both cases an improved metalworking operation and improved accessibility is achieved than what would have been possible with presently available inserts. The improved accessibility has been possible primarily due to the shape of the extension 17 in the manner defined in the appending claims.

## Claims

1. Indexable cutting insert (10) of generally triangular form for grooving operations each corner of which being provided with an extension (17, 18, 19) that carries a cutting edge (20) oriented substantially perpendicular from the grooving direction (I), whereby the edges (21, 22) of said extension which join the cutting edge are converging in the grooving direction, **characterized** in that each extension (17, 18, 19) is confined by an upper surface (24) in the shape of an inclined bevelled face which at least partially is raised above the triangular top surface (11) of the insert, said upper surface (24) being provided as the rake face of said cutting edge (20) and that the clearance surface (28) of said cutting edge exending at a height (h₂) in the direction of thickness that is equal to or less than the total thickness (h₁) of the insert.

2. Cutting insert as defined in claim 1, **characterized** in that the extension (17, 18, 19) at the corner of the insert has a clearance face (28) that is inclined in relation to the top surface (11) of the insert.

3. Cutting insert as defined in claim 1, **characterized** in that the extension (17, 18, 19) is confined downwards by an inclined surface (29) that is oriented at an obtuse angle with a clearance surface (28) and that each extension is confined in lateral direction by longitudinally extending edges (29a, 29b) which extends parallel with the cutting edge (20).

4. Cutting insert as defined in claim 1, **characterized** in that it is provided with a central aperture (16) for the receipt of a clamping device, said aperture extending in a direction perpendicularly from the top and bottom surfaces (11, 12) of the insert.

5. Cutting insert as defined in claim 1, **characterized** in that the extension (17, 18, 19) has a height (h₂) in direction of thickness of the insert which amounts to 30-50 % of the insert's total thickness (h₁).

6. Cutting insert as defined in claim 1, **characterized** in that the upper surface of the extension includes, in addition to surface (24), a surface (23) which is located below the plane of the top surface (11) of the insert.

7. Cutting insert as defined in claim 1, **characterized** in that the length (l₂) of the extension measured in grooving direction amounts to 30-40 % of the length (l₁) of the cutting edge (20).

8. Cutting insert as defined in claim 1, **characterized** in that the extension is confined by an edge (22) converging towards the cutting edge (20) which is oriented at an angle (α) in the range of 10-30° in relation to the grooving direction (I) whereas the opposite edge (21) of said extension extends mainly parallel with the grooving direction (I).

9. Cutting insert as defined in claim 1, **characterized** in that it has such dimension that the imaginary triangle (T) which inscribes the insert provides a tangential line in regard of the inner corner defined by edge 22 of said extension.

10. Cutting insert as defined in claim 1, **characterized** in that the cutting edge (20) extends in a direction oriented at an angle (β) from a line that extends perpendicularly in relation to the grooving direction (I).

11. Cutting insert as defined in claim 9, **characterized** in that the angle (β) amounts to 0,5-2°.

12. Cutting insert as defined in any of the claims 1-11, **characterized** in that the partially raised upper surface (24) intersects with several downwards inclined bevel surfaces (25, 26, 27) one of which having a surface (25) that intersects with cutting edge (20) and another surface (26) intersects at an obtuse angle with the side edge (21).

13. Cutting insert as defined in claim 12, **characterized** in that the inclined bevel phase surface (24) is a portion of a surface of a raised portion in the cutting corner, the extension of which is confined by two other inclined bevelled faces (25, 26) and an obtuse-angled bevel face (27) located therebetween.

## Patentansprüche

1. Wendeschneidplatte (10) von im allgemeinen dreieckiger Form zum Nutenschneiden, deren jeweilige Ecke mit einer Verlängerung (17, 18, 19) versehen ist, die eine Schneidkante (20) trägt, welche im wesentlichen senkrecht zur Nutenschneidrichtung (I) ausgerichtet ist, wobei die Kanten (21, 22) der Verlängerung, welche an die Schneidkante anschließen, in Nutenschneidrichtung konvergieren, **dadurch gekennzeichnet, daß** jede Verlängerung (17, 18, 19) durch ein obere Fläche (24) in der Gestalt einer geneigten, abgeschrägten Fläche begrenzt ist, die mindestens teilweise über die obere Dreieckoberfläche (11) des Einsatzes bzw. der Schneidplatte erhaben ist, wobei die obere Fläche (24) als die Spanfläche der Schneidkante (20) vorgesehen ist, und daß sich die Freifläche (28) der Schneidkante in einer Höhe (h₂) in Richtung der Dicke erstreckt, die gleich oder kleiner als die Gesamtdicke (h₁) der Schneidplatte ist.

2. Schneidplatte nach Anspruch 1, dadurch gekennzeichnet, daß die Verlängerung (17, 18, 19) an der Ecke der Schneidplatte eine Freifläche (28) hat, die bezüglich der oberen Fläche (11) der Schneidplatte geneigt ist.

3. Schneidplatte nach Anspruch 1, dadurch gekennzeichnet, daß die Verlängerung (17, 18, 19) nach unten durch eine geneigte Oberfläche (29) begrenzt ist, die unter einem stumpfen Winkel zur Freifläche (28) ausgerichtet ist und daß jede Verlängerung in Querrichtung durch sich längs erstreckende Kanten (29a, 29b) begrenzt ist, die sich parallel zur Schneidkante (20) erstrecken.

4. Schneidplatte nach Anspruch 1, dadurch gekennzeichnet, daß sie mit einer Mittenöffnung (16) versehen ist für die Aufnahme einer Klemmvorrichtung, wobei die Öffnung sich in einer Richtung senkrecht zur oberen und Bodenfläche (11, 12) der Schneidplatte erstreckt.

5. Schneidplatte nach Anspruch 1, dadurch gekennzeichnet, daß die Verlängerung (17, 18, 19) eine Höhe (h₂) in Richtung der Dicke der Schneidplatte hat, die sich auf 30 - 50% der Gesamtdicke (h₁) der Schneidplatte beläuft.

6. Schneidplatte nach Anspruch 1, dadurch gekennzeichnet, daß die obere Fläche der Verlängerung zusätzlich zur Oberfläche (24) eine Oberfläche (23) aufweist, die unter der Ebene der oberen Fläche (11) der Schneidplatte angeordnet ist.

7. Schneidplatte nach Anspruch 1, dadurch gekennzeichnet, daß die Länge (l₂) der Verlängerung, in Nutenschneidrichtung gemessen, sich auf 30 - 40% der Länge (l₁) der Schneidkante (20) beläuft.

8. Schneidplatte nach Anspruch 1, dadurch gekennzeichnet, daß die Verlängerung durch eine Kante (22) begrenzt ist, die zur Schneidkante (20) hin konvergiert, die unter einem Winkel (α) im Bereich von 10 - 30° bezüglich der Nutenschneidrichtung (I) ausgerichtet ist, während die gegenüberliegende Kante (21) der Verlängerung sich hauptsächlich parallel zur Nutenschneidrichtung (I) erstreckt.

9. Schneidplatte nach Anspruch 1, dadurch gekennzeichnet, daß sie ein solches Maß hat, daß das imaginäre Dreieck (T), welches die Schneidplatte einbeschreibt, eine Tangentiallinie bezüglich der inneren Ecke vorsieht, welche durch die Kante (22) der Verlängerung gebildet ist.

10. Schneidplatte nach Anspruch 1, dadurch gekennzeichnet, daß die Schneidkante (20) sich in einer Richtung erstreckt, die unter einem Winkel (β) von einer Linie ausgerichtet ist, die sich senkrecht zu der Nutenschneidrichtung (I) erstreckt.

11. Schneidplatte nach Anspruch 9, dadurch gekennzeichnet, daß der Winkel (β) sich auf 0,5 - 2° beläuft.

12. Schneidplatte nach einem der Ansprüche 1 - 11, dadurch gekennzeichnet, daß die teilweise erhabene obere Fläche (24) verschiedene nach unten geneigte, abgeschrägte Oberflächen (25, 26, 27) schneidet, deren eine eine Oberfläche (25) hat, welche die Schneidkante (20) schneidet, und eine andere Oberfläche (26) hat, welche die Seitenkante (21) unter einem stumpfen Winkel schneidet.

13. Schneidplatte nach Anspruch 12, dadurch gekennzeichnet, daß die geneigte, abgeschrägte Phasenoberfläche (24) ein Teil einer Oberfläche eines erhabenen Teils in der Schneidecke ist, deren Verlängerung durch zwei andere geneigte, abgeschrägte Flächen (25, 26) und eine abgeschrägte Fläche (27) im stumpfen Winkel begrenzt wird, die dazwischen angeordnet ist.

## Revendications

1. Insert de coupe indexable (10) de forme générale triangulaire pour des opérations de rainurage dans lequel chaque coin est pourvu d'une extension (17, 18, 19) qui porte un bord de coupe (20) orienté de manière sensiblement perpendiculaire par rapport au sens de rainurage (I), d'où il résulte que les bords (21, 22) de ladite extension qui se raccordent au bord de coupe convergent dans le sens de rainurage, caractérisé en ce que chaque extension (17, 18, 19) est limitée par une surface supérieure (24) ayant la forme d'une face biseautée inclinée qui est au moins partiellement saillante par rapport à la surface triangulaire supérieure (11) de l'insert, ladite surface supérieure (24) étant fournie en tant que face de coupe dudit bord de coupe (20) et en ce que la surface d'incidence (28) dudit bord de coupe s'étendant à une hauteur (h₂) dans le sens de l'épaisseur qui est égale ou inférieure à l'épaisseur totale (h₁) de l'insert.

2. Insert de coupe selon la revendication 1, caractérisé en ce que l'extension (17, 18, 19) au coin de l'insert possède une face d'incidence (28) qui est inclinée par rapport à la surface supérieure (11) de l'insert.

3. Insert de coupe selon la revendication 1, caractérisé en ce que l'extension (17, 18, 19) est limitée vers le bas par une surface inclinée (29) qui est orientée en faisant un angle obtus par rapport à une surface d'incidence (28) et en ce que chaque extension est limitée latéralement par des bords s'étendant longitudinalement (29a, 29b) laquelle s'étend parallèlement au bord de coupe (20).

4. Insert de coupe selon la revendication 1, caractérisé en ce qu'il est pourvu d'une ouverture centrale (16) destinée à recevoir un dispositif de serrage, ladite ouverture s'étendant dans une direction perpendiculaire par rapport aux surfaces supérieure et inférieure (11, 12) de l'insert.

5. Insert de coupe selon la revendication 1, caractérisé en ce que l'extension (17, 18, 19) a une hauteur (h₂) dans le sens de l'épaisseur de l'insert qui a une valeur comprise entre 30 et 50% de l'épaisseur totale de l'insert (h₁).

6. Insert de coupe selon la revendication 1, caractérisé en ce que la surface supérieure de l'extension comprend, en plus de la surface (24), une surface (23) qui est placée en dessous du plan de la surface supérieure (11) de l'insert.

7. Insert de coupe selon la revendication 1, caractérisé en ce que la longueur (l₂) de l'extension mesurée dans le sens de rainurage a une valeur comprise entre 30 et 40% de la longueur (l₁) du bord de coupe (20).

8. Insert de coupe selon la revendication 1, caractérisé en ce que l'extension est limitée par un bord (22) convergeant vers le bord de coupe (20) qui est orienté en faisant un angle (α) dans la gamme allant de 10 à 30° par rapport au sens de rainurage (I) alors que le bord opposé (21) de ladite extension s'étend principalement parallèlement au sens de rainurage (I).

9. Insert de coupe selon la revendication 1, caractérisé en ce que sa taille est telle que le triangle imaginaire (T) dans lequel s'inscrit l'insert présente une ligne qui est tangente par rapport au coin intérieur défini par le bord 22 de ladite extension.

10. Insert de coupe selon la revendication 1, caractérisé en ce que le bord de coupe (20) s'étend dans une direction orientée selon un angle (β) par rapport à une ligne qui s'étend perpendiculairement par rapport au sens de rainurage (I).

11. Insert de coupe selon la revendication 9, caractérisé en ce que l'angle (β) a une valeur comprise entre 0,5 et 2°.

12. Insert de coupe selon l'une quelconque des revendications 1 à 11, caractérisé en ce que la surface supérieure partiellement saillante (24) coupe plusieurs surfaces biseautées inclinées vers le bas (25, 26, 27) dont l'une possède une surface (25) qui coupe le bord de coupe (20) et une autre surface (26) coupe selon un angle obtus le bord latéral (21).

13. Insert de coupe selon la revendication 12, caractérisé en ce que la surface biseautée inclinée (24) est une partie d'une surface d'une partie saillante dans le coin de coupe, dont l'extension est limitée par deux autres faces biseautées inclinées (25, 26) et une face biseautée selon un angle obtus (27) placée entre elles.
